# EUROPEAN PATENT APPLICATION

(11) **EP 3 859 179 A1**
(43) Date of publication of application: **04.08.2021**
(21) Application number: 21156528.8
(22) Date of filing: 11.10.2018
(51) Int. Cl.: F16C 33/78, F16C 19/36, F16C 33/80, F16C 43/04

(54) **SEALING DEVICE**

(30) Priority: 13.10.2017 JP 2017199098
(62) Divisional of application: 18866935.2
(71) Applicant: NOK Corporation, Minato-ku, Tokyo 105-8585 (JP)
(72) Inventor: MIYANO, Hirofumi, Fukushima-shi, Fukushima 960-1193 (JP); AKIMOTO, Kento, Fukushima-shi, Fukushima 960-1193 (JP)
(74) Representative: TBK

(57) **Abstract**

A sealing device for sealing a gap between an inner member (6) and an outer member (8) that rotate relative to each other comprises an annular inner sealing member (20) that is to be fixed to the inner member and an annular outer sealing member (30) that is to be fixed to an internal surface of a hole (8A) of the outer member. The outer sealing member comprises a rigid part (32) formed of a rigid material and a resilient part (34) fixed to the rigid part and formed of an elastic material. The resilient part comprises a cylindrical tubular wall section (60) extending toward a flange (24) of the inner sealing member, a portion of the rigid part being embedded in the tubular wall section, a clearance (68) being provided between the tubular wall section and the flange.

## Description

### TECHNICAL FIELD

The present invention relates to sealing devices for sealing the insides of rolling bearings.

### BACKGROUND ART

Patent Document 1 discloses a sealing device that seals the inside of a rolling bearing suitable for use in railroad vehicles. The sealing device includes an inner ring supported by a rotating mechanical element and an outer ring including a seal body made of an elastomer supported by a housing to be sealed. The seal body is formed with multiple lips extending toward the inner ring.

### BACKGROUND DOCUMENTS

### Patent Documents

Patent Document 1: JP-A-2015-224788

### SUMMARY OF THE INVENTION

Rolling bearings for railroad vehicles or for large automotive vehicles, such as trucks and buses, receive large loads, are exposed to large amounts of dust, and are subject to significant temperature changes. In particular, there are large amounts of iron dust around railroad vehicles generated by wear of railroad track. When a rolling bearing is repaired, it is necessary to replace the sealing device. Therefore, a sealing device that can be easily removed is desirable.

Furthermore, a sealing device that can further reduce intrusion of foreign matter from the outside is desirable.

In addition, a sealing device that can form a very good seal is desired, even if the shaft inserted into the rolling bearing or the inner member of the rolling bearing is eccentric or is not perfectly round.

Accordingly, the present invention provides a sealing device that can solve at least one of the above problems.

A sealing device according to an aspect of the present invention is a sealing device located between an inner member and an outer member of a rolling bearing for sealing a gap between the inner member and the outer member that rotate relative to each other, and includes: an annular inner sealing member that is to be fixed to the inner member; and an annular outer sealing member that is to be fixed to an internal surface of a hole of the outer member, the inner sealing member being in slidable contact with the outer sealing member. The inner sealing member includes: a sleeve that is to be fixed to the inner member; and a flange integrally connected with an atmosphere side end portion of the sleeve and expanding radially outside the sleeve. The outer sealing member includes a rigid part formed of a rigid material; and a resilient part fixed to the rigid part and formed of an elastic material, a seal lip being formed in the resilient part, the seal lip being in slidable contact with the sleeve of the inner sealing member, a dust lip being formed in the resilient part, the dust lip being in slidable contact with the flange of the inner sealing member. The rigid part includes: a cylindrical section that is to be engaged in the internal surface of the hole of the outer member; a circular annular section integrally connected with an atmosphere side end portion of the cylindrical section and extending inward of the cylindrical section in radial directions; multiple axial direction projections projecting from the circular annular section toward an atmosphere side along an axial direction of the outer sealing member; and at least one guide portion configured to guide pulling the outer sealing member by means of a hand or by means of at least one jig.

In this aspect, the outer seal member is fixed to the hole by engaging the cylindrical section of the rigid part of the outer sealing member into the internal surface of the hole. The rigid part of the outer sealing member has at least one guide portion for guiding pulling the outer sealing member by means of a hand or by means of at least one jig, and thus, the outer sealing member can be extracted from the hole in the outer member of the rolling bearing, preferably together with the inner sealing member, by pulling the outer sealing member along the axial direction with the use of the guide portion. The rigid part of the outer sealing member has multiple axial direction projections, and the rigid part is less likely to be broken when it is pulled along the axial direction since the rigid part is reinforced in the axial direction of the outer sealing member by the axial direction projections. Therefore, the sealing device can be easily removed.

A sealing device according to another aspect of the present invention is a sealing device located between an inner member and an outer member of a rolling bearing for sealing a gap between the inner member and the outer member that rotate relative to each other, and includes: an annular inner sealing member that is to be fixed to the inner member; and an annular outer sealing member that is to be fixed to an internal surface of a hole of the outer member, the inner sealing member being in slidable contact with the outer sealing member. The inner sealing member includes: a sleeve that is to be fixed to the inner member; and a flange integrally connected with an atmosphere side end portion of the sleeve and expanding radially outside the sleeve. The outer sealing member includes: a rigid part formed of a rigid material; and a resilient part fixed to the rigid part and formed of an elastic material. The resilient part includes: an annular proximal section supported by the rigid part; a dust lip extending from the proximal section and being in slidable contact with the flange of the inner sealing member; a seal lip extending from the proximal section and being in slidable contact with an outer peripheral surface of the sleeve of the inner sealing member; and a cylindrical tubular wall section extending from the proximal section toward the flange of the inner sealing member. A clearance is provided between the tubular wall section and the flange.

In this aspect, even if external foreign matter is on the point of entering the sealing device, much of the foreign matter is deflected by the tubular wall section of the outer sealing member or the flange of the inner sealing member. Small amounts of foreign matter that have passed through the clearance between the tubular wall section and the flange reach the dust lip, but by designing this clearance so as to be small, the amounts of foreign matter reaching the dust lip can be reduced.

A sealing device according to another aspect of the present invention is a sealing device located between an inner member and an outer member of a rolling bearing for sealing a gap between the inner member and the outer member that rotate relative to each other, and includes an annular inner sealing member that is to be fixed to the inner member; and an annular outer sealing member that is to be fixed to an internal surface of a hole of the outer member, the inner sealing member being in slidable contact with the outer sealing member. The inner sealing member includes: a sleeve that is to be fixed to the inner member; and a flange integrally connected with an atmosphere side end portion of the sleeve and expanding radially outside the sleeve. The outer sealing member includes: a rigid part formed of a rigid material; and a resilient part fixed to the rigid part and formed of an elastic material. The resilient part includes: an annular proximal section supported by the rigid part; a dust lip comprising a proximal end portion extending from the proximal section toward an atmosphere side and inwardly in radial directions, and a distal end portion extending from the proximal end portion toward the atmosphere side and outwardly in radial directions, the distal end portion being in slidable contact with the flange of the inner sealing member; a seal lip comprising a proximal end portion extending from the proximal section toward the atmosphere side and inwardly in radial directions, and a distal end portion extending from the proximal end portion toward a bearing inner side and inwardly in radial directions, the distal end portion of the seal lip being in slidable contact with an outer peripheral surface of the sleeve of the inner sealing member.

In this aspect, the dust lip includes a proximal end portion extending radially inward and a distal end portion extending radially outward, in which the distal end portion is in slidable contact with the flange of the inner sealing member. Therefore, even if the shaft that is inserted into the rolling bearing or the inner member of the rolling bearing is eccentric or is not perfectly round, the dust lip is in contact with the flange with a substantially uniform force over the entire circumference. In this way, the sealing capability of the dust lip is ensured over the entire circumference. Furthermore, since the distal end portion of the dust lip exerts a force on the flange in the axial direction rather than the radial directions, an increase in torque applied to the shaft can be suppressed. In this aspect, the seal lip has a bent shape including a proximal end portion extending toward the atmosphere side and a distal end portion extending toward the bearing inner side, in which the distal end portion is in slidable contact with the outer peripheral surface of the sleeve of the inner sealing member. Since the seal lip has a bent shape, the seal lip is easily deformed. Therefore, even if the shaft inserted into the rolling bearing or the inner member of the rolling bearing is eccentric or is not perfectly round, the seal lip is in contact with the flange with a substantially uniform force over the entire circumference. In this way, the sealing capability of the seal lip is ensured over the entire circumference.

### BRIEF DESCRIPTION OF THE DRAWINGS

Fig. 1 is a cross-sectional view of a sealing device according to a first embodiment of the present invention;
Fig. 2 is a perspective view showing a rigid part of the sealing device in Fig. 1;
Fig. 3 is a cross-sectional view of the sealing device according to the first embodiment that is being removed from a rolling bearing;
Fig. 4 is a cross-sectional view of a sealing device according to a second embodiment of the present invention;
Fig. 5 is a cross-sectional view of a sealing device according to a third embodiment of the present invention that is being removed from a rolling bearing;
Fig. 6 is a perspective view showing a rigid part of the sealing device in Fig. 5;
Fig. 7 is a cross-sectional view of a sealing device according to a fourth embodiment of the present invention; and
Fig. 8 is a perspective view showing a rigid part of the sealing device in Fig. 7.

### DESCRIPTION OF EMBODIMENTS

Hereinafter, multiple embodiments according to the present invention will be described with reference to the accompanying drawings.

### FIRST EMBODIMENT

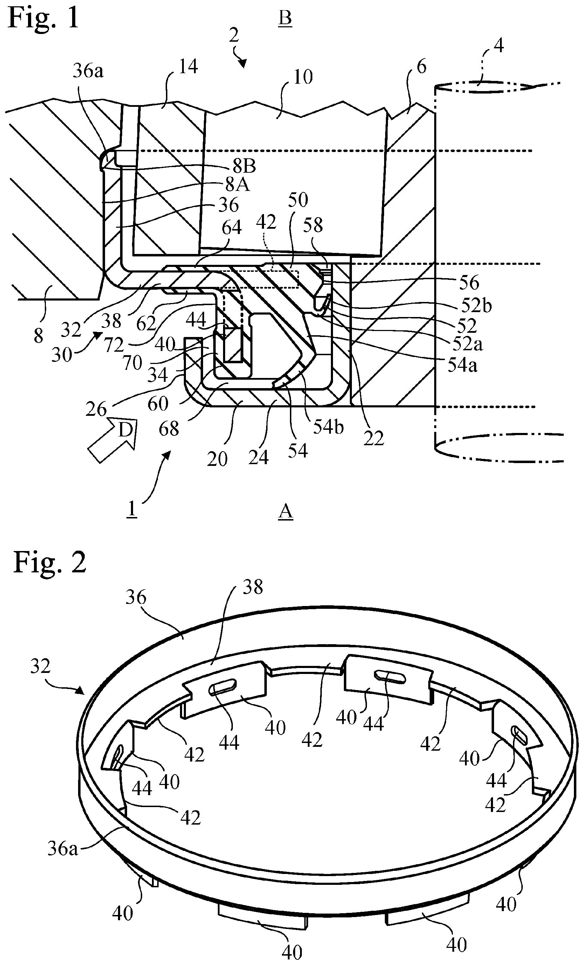

Fig. 1 shows a bearing for an axle of a railroad vehicle, which is an example of a rolling bearing 2 in which a sealing device 1 according to a first embodiment of the present invention is used. However, the use of the present invention is not limited to bearings for railroad vehicles, and the present invention can also be applied to bearings of axles of large automotive vehicles such as trucks and buses. The illustrated rolling bearing 2 is an RCT (Rotating End Cap Tapered Roller) bearing. However, the use of the present invention is not limited to RCT bearings, and the present invention can also be applied to other rolling bearings having other types of rolling elements, such as RCC (Rotating End Cap) bearings, ball bearings, and needle bearings.

As shown in Fig. 1, the rolling bearing 2 includes an inner race (inner member) 6 into which an axle 4 is inserted, an outer race (outer member) 8 arranged outside the inner race 6, multiple rollers 10 aligned in a row between the inner race 6 and the outer race 8, and a retainer 14 that retains the row of the rollers 10 in a fixed position. Whereas the outer race 8 is fixed, the inner race 6 rotates as the axle 4 rotates. The retainer 14 is fixed to the outer race 8.

The sealing device 1 is located between the inner race 6 and the outer race 8 that rotate relatively, and it seals the gap between the inner race 6 and the outer race 8. A function of the sealing device 1 prevents or reduces the outflow of grease, i.e., lubricant, from the inside of the rolling bearing 2, and prevents or reduces the inflow of foreign matter (including water (including muddy water or salt water) and/or dust (including iron dust)) from the outside to the inside of the rolling bearing 2. In Fig. 1, an arrow D indicates an example of the flow direction of foreign matter from the outside.

In Fig. 1, only the left side with respect to the axle 4 is shown, but the sealing device 1 and the rolling bearing 2 have rotationally symmetric shapes. The upper side of Fig. 1 is the bearing inner side B, whereas the lower side is the atmosphere side A. However, another sealing device similar to the sealing device 1 is provided on the opposite side of the rolling bearing 2 from the sealing device 1.

The sealing device 1 includes an annular inner sealing member 20 and an annular outer sealing member 30. The inner sealing member 20 is fixed to the inner race 6. The outer sealing member 30 is fixed to the internal surface of the hole 8A of the outer race 8, and the inner sealing member 20 is slidably in contact with the outer sealing member 30.

The inner sealing member 20 is made of a rigid material, for example, a metal. The inner sealing member 20 includes a sleeve 22, a flange 24, and an outer sleeve 26. The sleeve 22 is fixed to the inner race 6. The fixing method may be, for example, an interference fit. The flange 24 is integrally connected to the end portion of the sleeve 22 on the atmosphere side, and expands radially outside the sleeve 22. The outer sleeve 26 extends along the axial direction of the inner sealing member 20 from the outer edge of the flange 24 toward the bearing inner side B.

The outer sealing member 30 has a double structure including a rigid part 32 formed of a rigid material, for example, a metal, and a resilient part 34 formed of an elastic material, for example, an elastomer. The rigid part 32 reinforces the resilient part 34.

The rigid part 32 includes a cylindrical section 36 fixed to the internal surface of the hole 8A of the outer race 8, a circular annular section 38, multiple axial direction projections 40, and multiple inner extending sections 42.

The cylindrical section 36 is engaged into the internal surface of the hole 8A of the outer race 8 by interference fit. An end portion 36a on the bearing inner side B of the cylindrical section 36 is formed as a hook expanding radially outward. A circumferential groove, that is, a concave portion 8B is formed in the hole 8A, into which the end portion 36a of the cylindrical section 36 is engaged.

The circular annular section 38 is integrally connected to the end portion of the cylindrical section 36 on the atmosphere side A and extends toward the inside in radial directions of the cylindrical section 36. The circular annular section 38 lies in a plane perpendicular to the axial direction of the outer sealing member 30.

The multiple axial direction projections 40 protrude along the axial direction of the outer sealing member 30 from the circular annular section 38 toward the atmosphere side A. As shown in Fig. 2, the multiple axial direction projections 40 have shapes in which multiple portions spaced apart at angular intervals from one another in the circumferential direction in the circular annular section 38 are folded. In addition, multiple portions in the circular annular section 38 at which the multiple axial direction projections 40 are not formed are continuous with multiple inner extending sections 42 that extend radially inward from the circular annular section 38. Preferably, the axial direction projections 40 are arranged at equiangular intervals and the inner extending sections 42 are also arranged at equiangular intervals, but these angular intervals need not be equal. In this embodiment, eight axial direction projections 40 and eight inner extending sections 42 are provided, but the number of axial direction projections 40 and the number of inner extending sections 42 may be an unlimited number of two or more.

Referring back to Fig. 1, a recess (guide portion) 44 extending inward in the radial directions is formed on the radial outer surface of each axial direction projection 40. In this embodiment, the recesses 44 are through-holes, but the recesses 44 do not have to penetrate the axial direction projections 40.

The resilient part 34 includes an annular proximal section 50 supported by the rigid part 32, a seal lip 52, a dust lip 54, a radial direction protrusion 56, and a tubular wall section 60.

The proximal section 50 of the resilient part 34 is an annular section located radially inward of the multiple axial direction projections 40 of the rigid part 32, and is fixed to the multiple inner extending sections 42 of the rigid part 32. The multiple inner extending sections 42 that are intermittently arranged in the circumferential direction are embedded in the annular proximal section 50 that is continuous in the circumferential direction, so that the inner extending sections 42 reinforce the proximal section 50.

The seal lip 52 is a plate-like ring extending from the proximal section 50 and is in slidable contact with the outer peripheral surface of the sleeve 22 of the inner sealing member 20. The seal lip 52 mainly has a function of preventing or reducing leakage of grease from the bearing inner side B to the atmosphere side A. The seal lip 52 has a proximal end portion 52a extending from the proximal section 50 toward the atmosphere side A and radially inward, and a distal end portion 52b extending from the proximal end portion 52a toward the bearing inner side B and radially inward. The distal end portion 52b is in contact with the outer peripheral surface of the sleeve 22 of the inner sealing member 20 so as to be slidable over the entire circumference. The thickness of the proximal end portion 52a is greater than the thickness of the distal end portion 52b.

The dust lip 54 is a plate-like ring extending from the proximal section 50 and is in slidable contact with the side surface of the flange 24 of the inner sealing member 20 on the bearing inner side B. The dust lip 54 mainly has a function of preventing or reducing entry of foreign matter from the atmosphere side A to the bearing inner side B. The dust lip 54 has a proximal end portion 54a extending from the proximal section 50 toward the atmosphere side A and radially inward, and a distal end portion 54b extending from the proximal end portion 54a toward the atmosphere side A and radially outward. The distal end portion 54b is in contact with the side surface on the bearing inner side B of the flange 24 of the inner sealing member 20 so as to be slidable over the entire circumference. The thickness of the proximal end portion 54a is greater than the thickness of the distal end portion 54b.

The radial direction protrusion 56 protrudes radially inward from the inner edge of the proximal section 50. The radial direction protrusion 56 has a trapezoidal cross section having a width that is broader at the radial outer side and narrower at the radial inner side. The radial direction protrusion 56 is not in contact with the inner sealing member 20, and a small annular clearance 58 is provided between the radial direction protrusion 56 and the sleeve 22 of the inner sealing member 20. The clearance 58 assists the sealing capability of the seal lip 52 by impeding the flow of grease from the bearing inner side B to the atmosphere side A and reducing the amount of grease reaching the seal lip 52.

The tubular wall section 60 is a cylindrical section that extends from the outer edge of the proximal section 50 toward the flange 24 of the inner sealing member 20, and is fixed to the multiple axial direction projections 40 of the rigid part 32. The multiple axial direction projections 40 that are intermittently arranged in the circumferential direction are embedded in the cylindrical tubular wall section 60 that is continuous in the circumferential direction, so that the axial direction projections 40 reinforce the tubular wall section 60.

In the resilient part 34, not only the inner extending sections 42 of the rigid part 32, but also a part of the circular annular section 38 and the entirety of the multiple axial direction projections 40 are embedded. Specifically, a part of the surface on the atmosphere side A of the circular annular section 38 is covered with a portion 62 of the resilient part 34, and a part of the surface on the bearing inner side B of the circular annular section 38 is covered with a portion 64 of the resilient part 34, whereas the axial direction projections 40 are covered with the tubular wall section 60 of the resilient part 34. However, the circular annular section 38 need not be covered with an elastic material.

The multiple axial direction projections 40 provided intermittently on the rigid part 32 of the outer sealing member 30 and the tubular wall section 60 of the resilient part 34 extend toward the flange 24 of the inner sealing member 20. The tubular wall section 60 is not in contact with the flange 24, and a clearance 68 is provided between the tubular wall section 60 and the flange 24.

The outer sleeve 26 of the inner sealing member 20 is located outside the tubular wall section 60. The tubular wall section 60 is not in contact with the outer sleeve 26, and a clearance 70 is provided between the tubular wall section 60 and the outer sleeve 26.

In this embodiment, since the axial direction projections 40 are covered with the tubular wall section 60 of the resilient part 34, the resilient part 34 occludes the recesses 44 formed in the axial direction projections 40. In a portion of the tubular wall section 60 of the resilient part 34 covering the radial outer surface of each axial direction projection 40, portions 72 of the resilient part 34 that occlude the recesses 44 are concave. In manufacturing the sealing device 1, the material of the resilient part 34 greatly contracts in the vicinity of the recesses 44, so that the portions 72 can be concave. Alternatively, it is possible to perform work for making the portions 72 concave after manufacture of the sealing device 1.

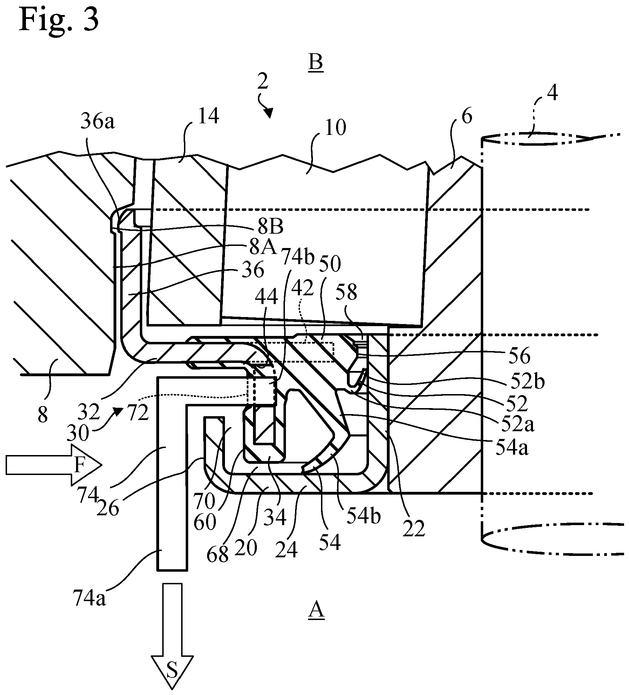

There is a need to replace the sealing device 1 when the rolling bearing 2 is repaired. With reference to Fig. 3, the removal operation of the sealing device 1 will be described.

First, multiple jigs 74 are prepared. The jig 74 has an elongated handle part 74a and a distal end part 74b that is bent with respect to the handle part 74a. The operating person grips the handle part 74a.

Then, the recesses 44 are captured by the jigs 74 by inserting the distal end part 74b of each jig 74 into a recess 44 formed in an axial direction projection 40 of the rigid part 32 of the outer sealing member 30 of the sealing device 1. As in this embodiment, in a case in which the recesses 44 are occluded by portions of the resilient part 34, the portions are greatly compressed by the distal end parts 74b, and the portions may be broken.

In this state, by applying forces F directed radially inward to the outer sealing member 30 by the jigs 74, the resilient part 34, and thus the rigid part 32 of the outer sealing member 30, are compressed in radial directions, whereby the cylindrical section 36 of the rigid part 32 of the outer sealing member 30 is partially separated from the internal surface of hole 8A of outer race 8.

Next, the outer sealing member 30 is moved along the axial direction by pulling the jigs 74, of which the distal end portions 74b are inserted into the recesses 44, with a force S, whereby the outer sealing member 30 can be extracted from the hole 8A of the outer race 8 of the rolling bearing 2. Once the cylindrical section 36 of the rigid part 32 of the outer sealing member 30 is partially separated from the internal surface of the hole 8A of the outer race 8, it is easy to extract the outer sealing member 30 from the hole 8A of the outer race 8 of the rolling bearing 2 by the use of the elastic deformation of the outer sealing member 30. As the outer sealing member 30 is extracted, the flange 24 is pushed by the tubular wall section 60 of the outer sealing member 30, so that the inner sealing member 20 fixed to the inner race 6 can also be extracted together with the outer sealing member 30. Thus, the sealing device 1 can be easily removed. However, it is not necessary to remove the outer sealing member 30 and the inner sealing member 20 at the same time, and the outer sealing member 30 may be pulled out from the outer race 8 after the inner sealing member 20 is pulled out from the inner race 6.

This removal operation uses multiple jigs 74, but a hand of an operating person may be used instead of the jigs 74. Even when multiple jigs 74 are used, the jigs 74 may be used only to pull out the outer sealing member 30 from the hole 8A of the outer race 8 by applying the force S to the outer sealing member 30. In other words, the outer sealing member 30 may be compressed in radial directions by applying forces F directed radially inward to the outer sealing member 30 by using the hand of an operating person or by using other jigs.

In this embodiment, the rigid part 32 is provided with a cylindrical section 36 that is engaged into the internal surface of the hole 8A of the outer race 8 of the rolling bearing 2, and an end portion 36a of the cylindrical section 36 is engaged into the concave portion 8B of the hole 8A. However, by applying radially inward forces to the outer sealing member 30 using the multiple axial direction projections 40, the resilient part 34, and thus the rigid part 32 of the outer sealing member 30, are compressed in radial directions, whereby the cylindrical section 36 of the rigid part 32 of the outer sealing member 30 can be partially separated from the internal surface of the hole 8A of the outer race 8. A recess 44 extending inward in a radial direction is formed on the radial outer surface of each axial direction projection 40. By capturing the recesses 44 with hand or by the jigs 74, it is easy to apply forces radially inward to the outer sealing member 30. Furthermore, after separating the cylindrical section 36 of the rigid part 32 of the outer sealing member 30 from the internal surface of the hole 8A of the outer race 8, the outer sealing member 30 is moved along the axial direction by pulling by hand or by the jigs 74 that have captured the recesses 44, whereby the outer sealing member 30 can be extracted from the hole 8A of the outer race 8 of the rolling bearing 2. Once the cylindrical section 36 of the rigid part 32 of the outer sealing member 30 is partially separated from the internal surface of the hole 8A of the outer race 8, it is easy to extract the outer sealing member 30 from the hole 8A of the outer race 8 of the rolling bearing 2 with the use of the elastic deformation of the outer sealing member 30. The rigid part 32 of the outer sealing member 30 has multiple axial direction projections 40, and the rigid part 32 is reinforced in the axial direction of the outer sealing member 30 by the axial direction projections 40, so that when the rigid part 32 is pulled along the axial direction, the rigid part 32 is not easily broken. Therefore, the sealing device 1 can be easily removed.

In this embodiment, the recesses 44 formed in the axial direction projections 40 are occluded by the resilient part 34. However, portions 72 of the resilient part 34 that occlude the recesses 44 are concave in a portion of the resilient part 34 that covers the radial outer surface of each axial direction projection 40. For this reason, even if the radial outer surfaces of the axial direction projections 40 are covered with the resilient part 34, the positions of the recesses 44 can be easily visually recognized.

In this embodiment, the multiple axial direction projections 40 have shapes in which multiple portions spaced apart at angular intervals in the circumferential direction of the circular annular section 38 of the rigid part 32 are folded, whereas multiple portions in the circular annular section 38 at which the multiple axial direction projections 40 are not formed are continuous with multiple inner extending sections 42 that extend radially inward from the circular annular section 38. Thus, the rigid part 32 is not only provided with multiple axial direction projections 40, but is also provided with multiple inner extending sections 42 spaced apart at angular intervals in the circumferential direction. The axial direction projections 40 and inner extending sections 42 reinforce the resilient part 34. Therefore, the strength of the resilient part 34 provided with the seal lip 52 and the dust lip 54 is increased.

In this embodiment, the resilient part 34 includes a cylindrical tubular wall section 60 extending toward the flange 24 of the inner sealing member 20, whereas multiple axial direction projections 40 are embedded in the tubular wall section 60, and a clearance 68 is provided between the tubular wall section 60 and the flange 24. The outer sleeve 26 of the inner sealing member 20 is located outside the tubular wall section 60, and a clearance 70 is provided between the tubular wall section 60 and the outer sleeve 26. Even if external foreign matter is on the point of entering the sealing device 1, many pieces of foreign matter are deflected by the tubular wall section 60 of the outer sealing member 30, the outer sleeve 26 of the inner sealing member 20, or the flange 24 of the inner sealing member 20. Small amounts of foreign matter that have passed through the clearance 70 between the tubular wall section 60 and the outer sleeve 26 and through the clearance 68 between the tubular wall section 60 and the flange 24 reach the dust lip 54, but by designing these clearances 68 and 70 so as to be small, the amounts of foreign matter reaching the dust lip 54 can be reduced. Since the tubular wall section 60 is reinforced by multiple axial direction projections 40 embedded therein, even if the force received from the foreign matter is strong, the tubular wall section 60 can withstand the force.

In this embodiment, the dust lip 54 includes a proximal end portion 54a that extends radially inward and a distal end portion 54b that extends radially outward, in which the distal portion 54b is in slidable contact with the flange 24 of the inner sealing member 20. Therefore, even if the axle 4 inserted into the rolling bearing 2 or the inner race 6 of the rolling bearing 2 is eccentric or is not perfectly round, the dust lip 54 is in contact with the flange 24 with a substantially uniform force over the entire circumference. In this way, the sealing capability of the dust lip 54 is ensured over the entire circumference. Moreover, since the distal end portion 54b of the dust lip 54 exerts force on the flange 24 in the axial direction rather than in radial directions, an increase in torque applied to the shaft can be suppressed.

In this embodiment, the seal lip 52 has a bent shape including a proximal end portion 52a extending toward the atmosphere side A and a distal end portion 52b extending toward the bearing inner side B, in which the distal end portion 52b is in slidable contact with the outer peripheral surface of the sleeve 22 of the inner sealing member 20. Since the seal lip 52 has a bent shape, the seal lip 52 is easily deformed. Therefore, even if the axle 4 inserted into the rolling bearing 2 or even if the inner race 6 of the rolling bearing 2 is eccentric or is not perfectly round, the seal lip 52 is in contact with the flange 24 with a substantially uniform force over the entire circumference. In this way, the sealing capability of the seal lip 52 is ensured over the entire circumference.

### SECOND EMBODIMENT

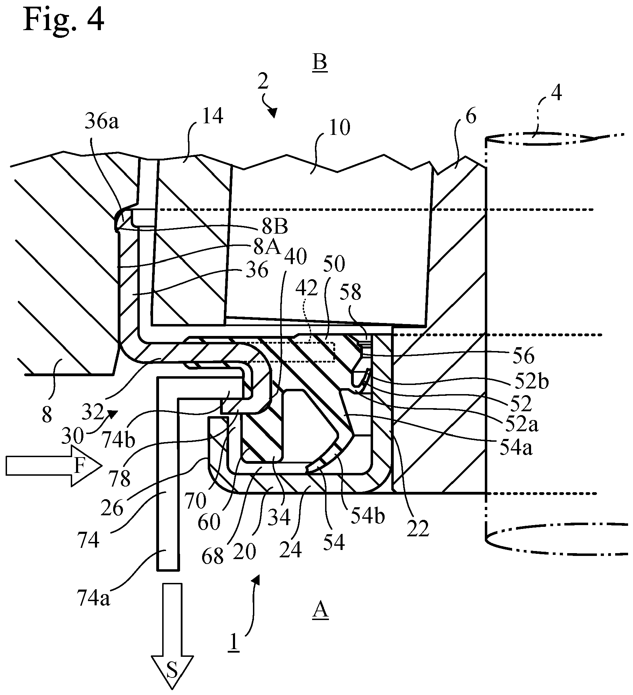

Fig. 4 is a cross-sectional view of a sealing device according to a second embodiment of the present invention. In Fig. 4 and the subsequent drawings, the same reference symbols are used for identifying components that are the same as those in the first embodiment, and such components will not be described in detail.

In this embodiment, a protrusion (guide portion) 78 protruding radially outward is formed on the radial outer surface of each axial direction projection 40, instead of the recess 44. Other features are the same as in the first embodiment.

In the removal operation of the sealing device 1, multiple jigs 74 can be used as in the first embodiment. The operating person grips the handle part 74a.

Then, the protrusions 78 are captured by the jigs 74 by hooking the distal end portion 74b of each jig 74 on a protrusion 78 formed in an axial direction projection 40 of the rigid part 32 of the outer sealing member 30 of the sealing device 1.

In this state, by applying forces F directed radially inward to the outer sealing member 30 by the jigs 74, the resilient part 34, and thus the rigid part 32 of the outer sealing member 30, are compressed in radial directions, whereby the cylindrical section 36 of the rigid part 32 of the outer sealing member 30 is partially separated from the internal surface of hole 8A of outer race 8.

Next, the outer sealing member 30 is moved along the axial direction by pulling the jigs 74, of which the distal end portions 74b are hooked on the protrusions 78, with a force S, whereby the outer sealing member 30 can be extracted from the hole 8A of the outer race 8 of the rolling bearing 2. Once the cylindrical section 36 of the rigid part 32 of the outer sealing member 30 is partially separated from the internal surface of the hole 8A of the outer race 8, it is easy to extract the outer sealing member 30 from the hole 8A of the outer race 8 of the rolling bearing 2 with the use of the elastic deformation of the outer sealing member 30. As the outer sealing member 30 is extracted, the flange 24 is pushed by the outer sealing member 30, so that the inner sealing member 20 fixed to the inner race 6 can also be extracted together with the outer sealing member 30. Thus, the sealing device 1 can be easily removed. However, it is not necessary to remove the outer sealing member 30 and the inner sealing member 20 at the same time, and the outer sealing member 30 may be pulled out from the outer race 8 after the inner sealing member 20 is pulled out from the inner race 6.

This removal operation uses the jigs 74, but an operating person's hand may be used instead of the jigs 74.

In this embodiment, the rigid part 32 is provided with a cylindrical section 36 that is engaged into the internal surface of the hole 8A of the outer race 8 of the rolling bearing 2, and an end portion 36a of the cylindrical section 36 is engaged into the concave portion 8B of the hole 8A. However, by applying radially inward forces to the outer sealing member 30 using the multiple axial direction projections 40, the resilient part 34, and thus the rigid part 32 of the outer sealing member 30, are compressed in radial directions, whereby the cylindrical section 36 of the rigid part 32 of the outer sealing member 30 can be partially separated from the internal surface of the hole 8A of the outer race 8. A protrusion 78 protruding outward in a radial direction is formed on the radial outer surface of each axial direction projection 40. By capturing the protrusions 78 by using a hand or by using the jigs 74, it is easy to apply forces radially inward to the outer sealing member 30. Furthermore, after separating the cylindrical section 36 of the rigid part 32 of the outer sealing member 30 from the internal surface of the hole 8A of the outer race 8, the outer sealing member 30 is moved along the axial direction by pulling the hand or jigs 74 that have captured the protrusions 78, whereby the outer sealing member 30 can be extracted from the hole 8A of the outer race 8 of the rolling bearing 2. Once the cylindrical section 36 of the rigid part 32 of the outer sealing member 30 is partially separated from the internal surface of the hole 8A of the outer race 8, it is easy to extract the outer sealing member 30 from the hole 8A of the outer race 8 of the rolling bearing 2 with the use of the elastic deformation of the outer sealing member 30. The rigid part 32 of the outer sealing member 30 has multiple axial direction projections 40, and the rigid part 32 is reinforced in the axial direction of the outer sealing member 30 by the axial direction projections 40, so that when the rigid part 32 is pulled along the axial direction, the rigid part 32 is not easily broken. Therefore, the sealing device 1 can be easily removed.

In this embodiment, the outer sealing member 30 is removed from the hole 8A of the outer race 8 by using the protrusions 78 formed on the multiple axial direction projections 40. The positions of the protrusions 78 can be easily visually recognized.

### THIRD EMBODIMENT

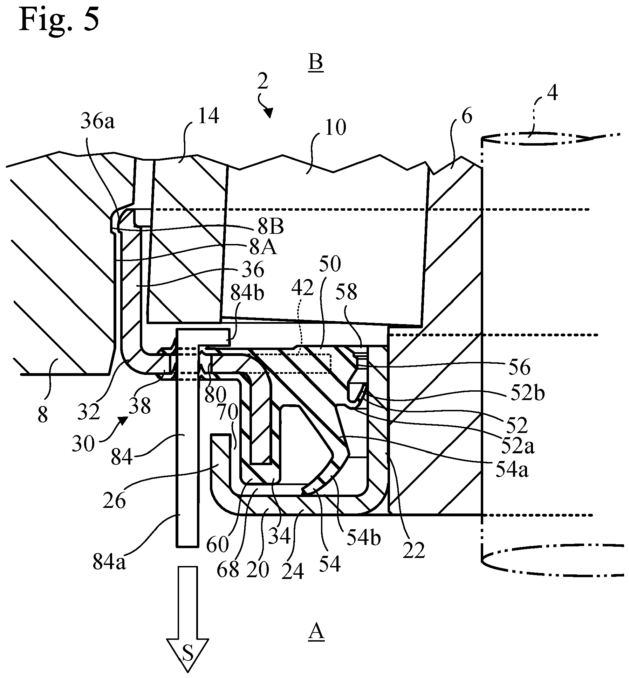

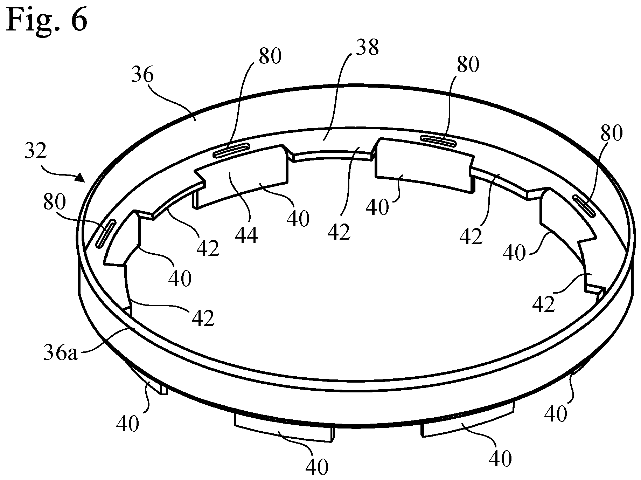

Fig. 5 is a cross-sectional view of a sealing device 1 according to a third embodiment of the present invention that is being removed from a rolling bearing 2, whereas Fig. 6 is a perspective view showing the rigid part 32 of the sealing device 1.

In this embodiment, at least one through-hole (guide portion) 80 is formed in the circular annular section 38 of the rigid part 32 of the outer sealing member 30. Preferably, as shown in Fig. 6, multiple through-holes 80 are formed in the circular annular section 38. Preferably, the through-holes 80 are arranged at equiangular intervals, but the angular intervals need not be equal. In this embodiment, eight through-holes 80 corresponding to the eight axial direction projections 40 are provided, but the number of through-holes 80 may be an unlimited number that is one or more. In this embodiment, each through-hole 80 is an elongated opening, but the shape of the through-hole 80 may be freely chosen as long as the distal end portion 84b of the jig 84 can be inserted, as will be described later.

Each through-hole 80 is arranged outside in a radial direction of one of axial direction projections 40. In this embodiment, each through-hole 80 is located on the radial outside of the central portion of an axial direction projection 40 in the circumferential direction, but may be located at another position. In this embodiment, the circular annular section 38 of the rigid part 32 is covered with the resilient part 34, so that the resilient part 34 occludes the through-holes 80 formed in the circular annular section 38. Other features are the same as in the first embodiment.

At least one jig 84 can be used for the removal operation of the sealing device 1. The jig 84 has an elongated handle part 84a and a distal end part 84b that is bent with respect to the handle part 84a. The operating person grips the handle part 84a.

Then, the outer sealing member 30 is captured by the jigs 84 by inserting the distal end part 84b of each jig 84 into a through-hole 80 formed in the circular annular section 38 of the rigid part 32 of the outer sealing member 30 of the sealing device 1, and by hooking the distal end part 84b on the circular annular section 38. As in this embodiment, in a case in which the through-holes 80 are occluded by portions of the resilient part 34, the portions may be broken through by means of the distal end parts 84b.

Next, the outer sealing member 30 is moved along the axial direction by pulling the jigs 84, of which the tip distal end parts 84b are hooked on the circular annular section 38, with a force S, whereby the outer sealing member 30 can be extracted from the hole 8A of the outer race 8 of the rolling bearing 2. As the outer sealing member 30 is extracted, the flange 24 is pushed by the outer sealing member 30, so that the inner sealing member 20 fixed to the inner race 6 can also be extracted together with the outer sealing member 30. Thus, the sealing device 1 can be easily removed. However, it is not necessary to remove the outer sealing member 30 and the inner sealing member 20 at the same time, and the outer sealing member 30 may be pulled out from the outer race 8 after the inner sealing member 20 is pulled out from the inner race 6.

The rigid part 32 is reinforced in the axial direction of the outer sealing member 30 by the axial direction projections 40, and the through-holes 80 are located radially outside of the axial direction projections 40. Accordingly, when the circular annular section 38 is pulled along the axial direction, portions around the through-holes 80 of the rigid part 32 are not easily broken.

It is preferable that the portions of the resilient part 34 that occlude the through-holes 80 be concave. In this embodiment, since the circular annular section 38 of the rigid part 32 is covered with the resilient part 34, the resilient part 34 occludes the through-holes 80 formed in the circular annular section 38. However, if the portions are concave, the positions of the through-holes 80 can be easily visually recognized. In manufacturing the sealing device 1, the material of the resilient part 34 greatly contracts in the vicinity of the through-holes 80, so that the portions that occlude the through-holes 80 can be concave. Alternatively, it is possible to perform work for making the portions concave after manufacture of the sealing device 1.

### FOURTH EMBODIMENT

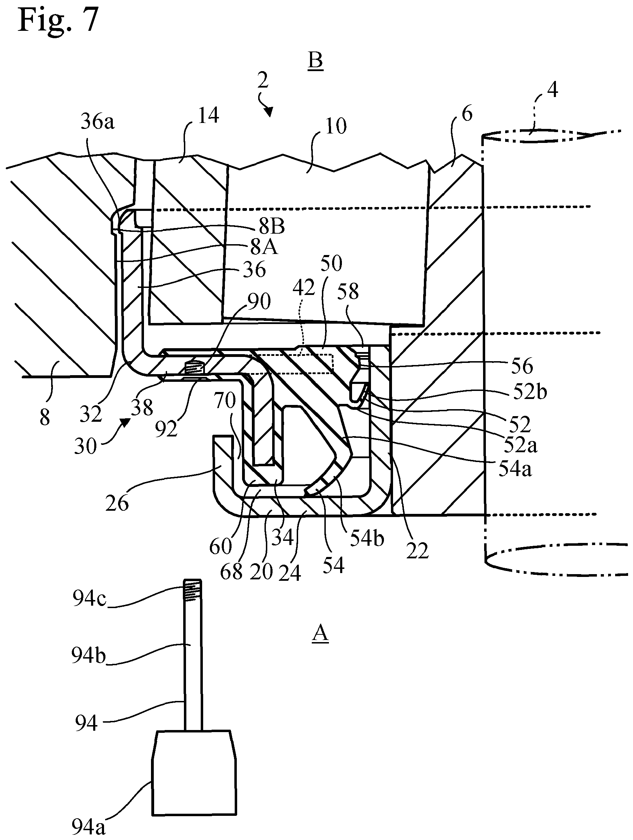

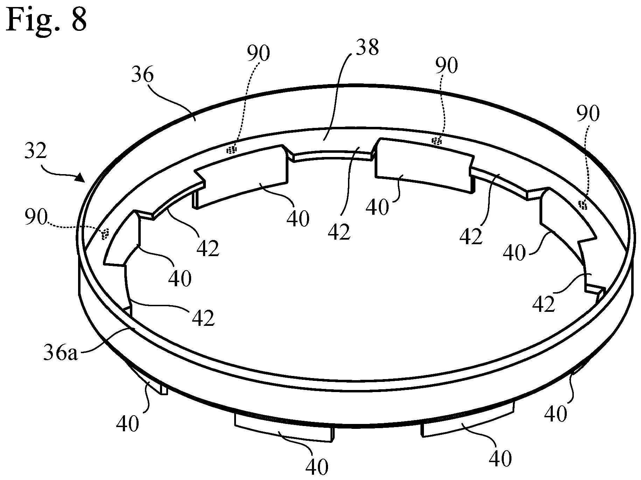

Fig. 7 is a cross-sectional view of a sealing device 1 according to a fourth embodiment of the present invention, whereas Fig. 8 is a perspective view showing the rigid part 32 of the sealing device 1.

In this embodiment, at least one screw hole (guide portion) 90 is formed in the circular annular section 38 of the rigid part 32 of the outer sealing member 30. Preferably, as shown in Fig. 8, multiple screw holes 90 are formed in the circular annular section 38. Preferably, the screw holes 90 are arranged at equiangular intervals, but the angular intervals need not be equal. In this embodiment, eight screw holes 90 corresponding to the eight axial direction projections 40 are provided, but the number of screw holes 90 may be an unlimited number that is one or more. In this embodiment, each screw hole 90 is a hole formed in the lower surface (surface on the atmosphere side A) of the circular annular section 38, but the screw hole 90 may be a through-hole.

Each screw hole 90 is arranged outside in a radial direction of one of axial direction projections 40. In this embodiment, each screw hole 90 is located on the radial outside of the central portion of an axial direction projection 40 in the circumferential direction, but it may be located at another position. In this embodiment, the circular annular section 38 of the rigid part 32 is covered with the resilient part 34, so that the resilient part 34 occludes the screw holes 90 formed in the circular annular section 38. Other features are the same as in the first embodiment.

At least one jig 94 can be used for the removal operation of the sealing device 1. The jig 94 has a handle part 94a and a stem 94b that is coaxial with the handle part 94a. A male thread 94c is formed at the distal end of the stem 94b. The operating person grips the handle part 94a.

Then, the outer sealing member 30 is captured by the jigs 94 by engaging the male thread 94c of the stem 94b of each jig 94 with the screw hole 90 formed in the circular annular section 38 of the rigid part 32 of the outer sealing member 30 of the sealing device 1. As in this embodiment, in a case in which the screw holes 90 are occluded by portions of the resilient part 34, the portions may be broken through by means of the stem 94b.

Next, the outer sealing member 30 is moved along the axial direction by pulling the jigs 94, of which the stems 94b capture the circular annular section 38, whereby the outer sealing member 30 can be extracted from the hole 8A of the outer race 8 of the rolling bearing 2. As the outer sealing member 30 is extracted, the flange 24 is pushed by the outer sealing member 30, so that the inner sealing member 20 fixed to the inner race 6 can also be extracted together with the outer sealing member 30. Thus, the sealing device 1 can be easily removed. However, it is not necessary to remove the outer sealing member 30 and the inner sealing member 20 at the same time, and the outer sealing member 30 may be pulled out from the outer race 8 after the inner sealing member 20 is pulled out from the inner race 6.

The rigid part 32 is reinforced in the axial direction of the outer sealing member 30 by the axial direction projections 40, and the screw holes 90 are located radial outside of the axial direction projections 40. Accordingly, when the circular annular section 38 is pulled along the axial direction, portions around the screw holes 90 of the rigid part 32 is not easily broken.

It is preferable that portions 92 of the resilient part 34 that occlude the screw holes 90 be concave. In this embodiment, since the circular annular section 38 of the rigid part 32 is covered with the resilient part 34, the resilient part 34 occludes the screw holes 90 formed in the circular annular section 38. However, if the portions 92 are concave, the positions of the screw holes 90 can be easily visually recognized. In manufacturing the sealing device 1, the material of the resilient part 34 greatly contracts in the vicinity of the screw holes 90, so that the portions 92 that occlude the through-holes 80 can be concave. Alternatively, it is possible to perform work for making the portions 92 concave after manufacture of the sealing device 1.

### Other Modifications

Although the present invention has been described, the foregoing description is not intended to limit the present invention. Various modifications including one or more omissions, additions, and substitutions of structural elements may be made within the scope of the present invention.

For example, the shape and number of lips of the sealing device are not limited to those described above.

In the above embodiments, the inner race 6 that is the inner member is a rotating member, and the outer race 8 that is the outer member is a stationary member. However, the present invention is not limited to the above embodiments, and it can be applied to sealing multiple members that rotate relative to each other. For example, the inner member may be stationary, and the outer member may rotate, or all of these members may rotate.

Aspects of the present invention are also set out in the following numbered clauses:
Clause 1. A sealing device located between an inner member and an outer member of a rolling bearing for sealing a gap between the inner member and the outer member that rotate relative to each other, comprising:
   an annular inner sealing member that is to be fixed to the inner member; and
   an annular outer sealing member that is to be fixed to an internal surface of a hole of the outer member, the inner sealing member being in slidable contact with the outer sealing member,
   the inner sealing member comprising:
      a sleeve that is to be fixed to the inner member; and
      a flange integrally connected with an atmosphere side end portion of the sleeve and expanding radially outside the sleeve,
   the outer sealing member comprising:
      a rigid part formed of a rigid material; and
      a resilient part fixed to the rigid part and formed of an elastic material,
      a seal lip being formed in the resilient part, the seal lip being in slidable contact with the sleeve of the inner sealing member,
      a dust lip being formed in the resilient part, the dust lip being in slidable contact with the flange of the inner sealing member,
      the rigid part comprising:
         a cylindrical section that is to be engaged in the internal surface of the hole of the outer member;
         a circular annular section integrally connected with an atmosphere side end portion of the cylindrical section and extending inward of the cylindrical section in radial directions;
         multiple axial direction projections projecting from the circular annular section toward an atmosphere side along an axial direction of the outer sealing member; and
         at least one guide portion configured to guide pulling the outer sealing member by means of a hand or by means of at least one jig.
Clause 2. A sealing device according to clause 1, wherein each of the axial direction projections comprising a radial outer surface on which a recess extending inward in a radial direction or a protrusion protruding outward in the radial direction is formed as the guide portion.
   In this case, by applying radial inward forces to the outer sealing member using the multiple axial direction projections, the resilient part, and thus the rigid part of the outer sealing member, are compressed in radial directions, whereby the cylindrical section of the rigid part of the outer sealing member can be partially separated from the internal surface of the hole of the outer member. A recess extending inward in a radial direction or a protrusion protruding outward in the radial direction is formed as the guide portion on the radial outer surface of each axial direction projection. By capturing the recesses or protrusions by a hand or by at least one jig, it is easy to apply forces radially inward to the outer sealing member. Furthermore, after separating the cylindrical section of the rigid part of the outer sealing member from the internal surface of the hole of the outer member, the outer sealing member is moved along the axial direction, preferably together with the inner sealing member, by pulling by a hand or by at least one jig that has captured the recesses or protrusions, whereby the outer sealing member can be extracted from the hole of the outer member of the rolling bearing. Once the cylindrical section of the rigid part of the outer sealing member is partially separated from the internal surface of the hole of the outer member, it is easy to extract the outer sealing member from the hole of the outer member of the rolling bearing by the use of the elastic deformation of the outer sealing member.
Clause 3. A sealing device according to clause 2, wherein each of the axial direction projections comprising a radial outer surface on which a recess extending inward in a radial direction is formed as the guide portion,
   the resilient part covering the radial outer surface of each of the axial direction projections so as to occlude the recesses,
   portions of the resilient part occluding the recesses in a portion of the resilient part covering the radial outer surface of each of the axial direction projections are concave.
   In this case, since portions of the resilient part that occlude the recesses, which are guide portions, are concave, even if the radial outer surfaces of the axial direction projections are covered with the resilient part, the positions of the recesses can be easily visually recognized.
Clause 4. A sealing device according to clause 1, wherein at least one through-hole is formed at the circular annular section as the guide portion, the through-hole being arranged outwardly of one of the axial direction projections in a radial direction.
   In this case, by inserting a finger of a hand or by inserting a jig into the through-hole, which is the guide portion, formed in the circular annular section, and by pulling the circular annular section along the axial direction of the outer sealing member by the finger of a hand or by a jig, the outer sealing member can be extracted from the hole of the outer member of the rolling bearing, preferably, together with the inner sealing member. The rigid part is reinforced in the axial direction of the outer sealing member by the axial direction projections, and the through-hole is located radially outside of an axial direction projection. Accordingly, when the circular annular section is pulled along the axial direction, a portion around the through-hole of the rigid part is not easily broken.
Clause 5. A sealing device according to clause 1, wherein at least one screw hole is formed at the circular annular section as the guide portion, the screw hole being arranged outwardly of one of the axial direction projections in a radial direction.
   In this case, by engaging a male thread of a jig with the screw-hole, which is the guide portion, formed in the circular annular section, and by pulling the circular annular section along the axial direction of the outer sealing member by a jig, the outer sealing member can be extracted from the hole of the outer member of the rolling bearing, preferably together with the inner sealing member. The rigid part is reinforced in the axial direction of the outer sealing member by the axial direction projections, and the screw hole is located radially outside of an axial direction projection. Accordingly, when the circular annular section is pulled along the axial direction, a portion around the screw-hole of the rigid part is not easily broken.
Clause 6. A sealing device according to any one of clauses 1-5, wherein the multiple axial direction projections have shapes in which multiple portions of the circular annular section are folded, the multiple portions being spaced apart at angular intervals from one another in a circumferential direction,
   multiple portions of the circular annular section at which the multiple axial direction projections are not formed continue to be connected with multiple inner extending sections extending inward from the circular annular section toward in radial directions,
   the resilient part being fixed to the axial direction projections and the inner extending sections.
   In this case, the rigid part is not only provided with multiple axial direction projections, but is also provided with multiple inner extending sections spaced apart at angular intervals in the circumferential direction. The axial direction projections and inner extending sections reinforce the resilient part. Therefore, the strength of the resilient part provided with the seal lip and the dust lip is increased.
Clause 7. A sealing device according to any one of clauses 1-6, wherein the resilient part comprises a cylindrical tubular wall section extending toward the flange of the inner sealing member, the multiple axial direction projections being embedded in the tubular wall section, a clearance being provided between the tubular wall section and the flange.
   In this case, even if external foreign matter is on the point of entering the sealing device, many pieces of foreign matter will be deflected by the tubular wall section of the outer sealing member or the flange of the inner sealing member. Small amounts of foreign matter that have passed through the clearance between the tubular wall section and the flange reach the dust lip, but by designing the clearance so as to be small, the amounts of foreign matter reaching the dust lip can be reduced. Since the tubular wall section is reinforced by multiple axial direction projections embedded therein, even if the force received from the foreign matter is strong, the tubular wall section can withstand the force.
Clause 8. A sealing device according to clause 7, wherein the inner sealing member further comprises an outer sleeve extending from an outer edge of the flange toward a bearing inner side along an axial direction of the inner sealing member,
   the outer sleeve being arranged outside of the tubular wall section,
   a clearance being provided between the tubular wall section and the outer sleeve.
   In this case, even if external foreign matter is on the point of entering the sealing device, many pieces of foreign matter are deflected by the tubular wall section of the outer sealing member, the outer sleeve of the inner sealing member, or the flange of the inner sealing member. Small amounts of foreign matter that have passed through the clearance between the tubular wall section and the outer sleeve and through the clearance between the tubular wall section and the flange reach the dust lip, but by designing these clearances so as to be small, the amounts of foreign matter reaching the dust lip can be reduced.
Clause 9. A sealing device according to any one of clauses 1-8, wherein the resilient part of the outer sealing member comprises an annular proximal section located inside of the multiple axial direction projections in radial directions and supported by the rigid part,
   the dust lip comprising a proximal end portion extending from the proximal section toward the atmosphere side and inwardly in radial directions, and a distal end portion extending from the proximal end portion toward the atmosphere side and outwardly in radial directions,
   the distal end portion being in slidable contact with the flange of the inner sealing member.
   In this case, the dust lip includes a proximal end portion that extends radially inward and a distal end portion that extends radially outward, in which the distal portion is in slidable contact with the flange of the inner sealing member. Therefore, even if the shaft inserted into the rolling bearing or the inner member of the rolling bearing is eccentric or is not perfectly round, the dust lip is in contact with the flange with a substantially uniform force over the entire circumference. In this way, the sealing capability of the dust lip is ensured over the entire circumference. Moreover, since the distal end portion of the dust lip exerts force on the flange in the axial direction rather than in radial directions, an increase in torque applied to the shaft can be suppressed.
Clause 10. A sealing device according to clause 9, wherein the seal lip comprises a proximal end portion extending from the proximal section toward the atmosphere side and inwardly in radial directions, and a distal end portion extending from the proximal end portion toward a bearing inner side and inwardly in radial directions,
   the distal end portion of the seal lip being in slidable contact with an outer peripheral surface of the sleeve of the inner sealing member.
   In this case, the seal lip has a bent shape including a proximal end portion extending toward the atmosphere side and a distal end portion extending toward the bearing inner side, in which the distal end portion is in slidable contact with the outer peripheral surface of the sleeve of the inner sealing member. Since the seal lip has a bent shape, the seal lip is easily deformed. Therefore, even if the shaft inserted into the rolling bearing or the inner race of the rolling bearing is eccentric or is not perfectly round, the seal lip is in contact with the flange with a substantially uniform force over the entire circumference. In this way, the sealing capability of the seal lip is ensured over the entire circumference.
Clause 11. A sealing device located between an inner member and an outer member of a rolling bearing for sealing a gap between the inner member and the outer member that rotate relative to each other, comprising:
   an annular inner sealing member that is to be fixed to the inner member; and
   an annular outer sealing member that is to be fixed to an internal surface of a hole of the outer member, the inner sealing member being in slidable contact with the outer sealing member,
   the inner sealing member comprising:
      a sleeve that is to be fixed to the inner member; and
      a flange integrally connected with an atmosphere side end portion of the sleeve and expanding radially outside the sleeve,
   the outer sealing member comprising:
      a rigid part formed of a rigid material; and
      a resilient part fixed to the rigid part and formed of an elastic material,
      the resilient part comprising:
         an annular proximal section supported by the rigid part;
         a dust lip extending from the proximal section and being in slidable contact with the flange of the inner sealing member;
         a seal lip extending from the proximal section and being in slidable contact with an outer peripheral surface of the sleeve of the inner sealing member; and
         a cylindrical tubular wall section extending from the proximal section toward the flange of the inner sealing member,
         a clearance being provided between the tubular wall section and the flange.
Clause 12. A sealing device according to clause 11, wherein a portion of the rigid part is embedded in the tubular wall section.
   In this case, since the tubular wall section is reinforced by the portion of the rigid part embedded therein, even if the force received from the foreign matter is strong, the tubular wall section can withstand the force.
Clause 13. A sealing device according to clause 11 or 12, wherein the inner sealing member further comprises an outer sleeve extending from an outer edge of the flange toward a bearing inner side along an axial direction of the inner sealing member,
   the outer sleeve being arranged outside of the tubular wall section,
   a clearance being provided between the tubular wall section and the outer sleeve.
   In this case, even if external foreign matter is on the point of entering the sealing device, many pieces of foreign matter are deflected by the tubular wall section of the outer sealing member, the outer sleeve of the inner sealing member, or the flange of the inner sealing member. Small amounts of foreign matter that have passed through the clearance between the tubular wall section and the outer sleeve and through the clearance between the tubular wall section and the flange reach the dust lip, but by designing these clearances so as to be small, the amounts of foreign matter reaching the dust lip can be reduced.
Clause 14. A sealing device located between an inner member and an outer member of a rolling bearing for sealing a gap between the inner member and the outer member that rotate relative to each other, comprising:
   an annular inner sealing member that is to be fixed to the inner member; and
   an annular outer sealing member that is to be fixed to an internal surface of a hole of the outer member, the inner sealing member being in slidable contact with the outer sealing member,
   the inner sealing member comprising:
      a sleeve that is to be fixed to the inner member; and
      a flange integrally connected with an atmosphere side end portion of the sleeve and expanding radially outside the sleeve,
   the outer sealing member comprising:
      a rigid part formed of a rigid material; and
      a resilient part fixed to the rigid part and formed of an elastic material,
      the resilient part comprising:
         an annular proximal section supported by the rigid part;
         a dust lip comprising a proximal end portion extending from the proximal section toward an atmosphere side and inwardly in radial directions, and a distal end portion extending from the proximal end portion toward the atmosphere side and outwardly in radial directions, the distal end portion being in slidable contact with the flange of the inner sealing member;
         a seal lip comprising a proximal end portion extending from the proximal section toward the atmosphere side and inwardly in radial directions, and a distal end portion extending from the proximal end portion toward a bearing inner side and inwardly in radial directions, the distal end portion of the seal lip being in slidable contact with an outer peripheral surface of the sleeve of the inner sealing member.
Clause 15. A sealing device according to clause 14, wherein the resilient part comprises a cylindrical tubular wall section extending toward the flange of the inner sealing member, a portion of the rigid part being embedded in the tubular wall section, a clearance being provided between the tubular wall section and the flange.
   In this case, even if external foreign matter is on the point of entering the sealing device, many pieces of foreign matter are deflected by the tubular wall section of the outer sealing member or the flange of the inner sealing member. Small amounts of foreign matter that have passed through the clearance between the tubular wall section and the flange reach the dust lip, but by designing the clearance so as to be small, the amounts of foreign matter reaching the dust lip can be reduced. Since the tubular wall section is reinforced by a portion of the rigid part embedded therein, even if the force received from the foreign matter is strong, the tubular wall section can withstand the force.
Clause 16. A sealing device according to clause 15, wherein the inner sealing member further comprises an outer sleeve extending from an outer edge of the flange toward the bearing inner side along an axial direction of the inner sealing member,
   the outer sleeve being arranged outside of the tubular wall section,
   a clearance being provided between the tubular wall section and the outer sleeve.

In this case, even if external foreign matter is on the point of entering the sealing device, many pieces of foreign matter are deflected by the tubular wall section of the outer sealing member, the outer sleeve of the inner sealing member, or the flange of the inner sealing member. Small amounts of foreign matter that have passed through the clearance between the tubular wall section and the outer sleeve and through the clearance between the tubular wall section and the flange reach the dust lip, but by designing these clearances so as to be small, the amounts of foreign matter reaching the dust lip can be reduced.

### REFERENCE SYMBOLS

1: Sealing Device
2: Rolling Bearing
4: Axle
6: Inner Race (Inner Member)
8: Outer Race (Outer Member)
8A: Hole
10: Roller
20: Inner Sealing Member
30: Outer Sealing Member
22: Sleeve
24: Flange
26: Outer Sleeve
32: Rigid Part
34: Resilient Part
36: Cylindrical Section
38: Circular Annular Section
40: Axial Direction Projections
42: Inner Extending Sections
44: Recess (Guide Portion)
50: Proximal Section
52: Seal Lip
52a: Proximal End Portion
52b: Distal End Portion
54: Dust Lip
54a: Proximal End Portion
54b: Distal End Portion
60: Tubular Wall Section
68: Clearance
70: Clearance
72: Portion of Resilient Part
78: Protrusion (Guide Portion)
80: Through-Hole (Guide Portion)
90: Screw Hole (Guide Portion)

## Claims

1. A sealing device (1) located between an inner member (6) and an outer member (8) of a rolling bearing (2) for sealing a gap between the inner member (6) and the outer member (8) that rotate relative to each other, comprising:
an annular inner sealing member (20) that is to be fixed to the inner member (6); and
an annular outer sealing member (30) that is to be fixed to an internal surface of a hole (8A) of the outer member (8), the inner sealing member (20) being in slidable contact with the outer sealing member (30),
the inner sealing member (20) comprising:
a sleeve (22) that is to be fixed to the inner member (6); and
a flange (24) integrally connected with an atmosphere side end portion of the sleeve (22) and expanding radially outside the sleeve (22),
the outer sealing member (30) comprising:
a rigid part (32) formed of a rigid material; and
a resilient part (34) fixed to the rigid part (32) and formed of an elastic material,
the resilient part (34) comprising:
an annular proximal section (50) supported by the rigid part (32);
a dust lip (54) comprising a proximal end portion (54a) extending from the proximal section (50) toward an atmosphere side and inwardly in radial directions, and a distal end portion (54b) extending from the proximal end portion (54a) toward the atmosphere side and outwardly in radial directions, the distal end portion (54b) being in slidable contact with the flange (24) of the inner sealing member (20);
a seal lip (52) comprising a proximal end portion (52a) extending from the proximal section (50) toward the atmosphere side and inwardly in radial directions, and a distal end portion (52b) extending from the proximal end portion (52a) toward a bearing inner side and inwardly in radial directions, the distal end portion (52b) of the seal lip (52) being in slidable contact with an outer peripheral surface of the sleeve (22) of the inner sealing member (20),
**characterized in that**
the resilient part (34) comprises a cylindrical tubular wall section (60) extending toward the flange (24) of the inner sealing member (20), the tubular wall section (60) being distant from the outer member (8) and radial inside of the outer member (8), a portion of the rigid part (32) being embedded in the tubular wall section (60), a clearance (68) being provided between the tubular wall section (60) and the flange (24).

2. A sealing device (1) according to claim 1, wherein the inner sealing member (20) further comprises an outer sleeve (26) extending from an outer edge of the flange (24) toward the bearing inner side along an axial direction of the inner sealing member (20),
the outer sleeve (26) being arranged outside of the tubular wall section (60),
a clearance (70) being provided between the tubular wall section (60) and the outer sleeve (26).
